# EUROPEAN PATENT SPECIFICATION

(11) **EP 3 988 623 B1**
(45) Date of publication and mention of the grant of the patent: **30.10.2024**
(21) Application number: 20800223.8
(22) Date of filing: 08.09.2020
(51) Int. Cl.: C09D 11/38

(54) **INKJET INKS COMPRISING WATER SOLUBLE MATERIALS**
TINTENSTRAHLTINTEN MIT WASSERLÖSLICHEN MATERIALIEN
ENCRES POUR JET D'ENCRE COMPRENANT DES MATÉRIAUX SOLUBLES DANS L'EAU

(30) Priority: 17.09.2019 US 201962901435 P
(43) Date of publication of application: 27.04.2022
(73) Proprietor: Sun Chemical B.V., 1382 LV Weesp (NL)
(72) Inventor: BONO PALOMAR, Ramón, 12200 Onda, Castellón (ES); BALCELLS-GÓMEZ, Francisco Javier, 12200 Onda, Castellón (ES); CUEVAS DEUSA, Vicente, 12200 Onda, Castellón (ES); TICHELL ALEGRE, Maite, 12200 Onda, Castellón (ES)
(74) Representative: Carpmaels & Ransford LLP
(86) International application number: PCT/ES2020/070537
(87) International publication number: WO 2021/053250

(56) References cited:
- WO-A1-2015/158738
- WO-A1-2016/210145
- WO-A1-2017/067979
- CN-A- 106 046 939
- US-A1- 2013 265 376

## Description

The present invention relates to solvent-based inkjet compositions (such as solvent-based pigmented inkjet compositions and solvent-based pigmented ceramic inkjet compositions) comprising dispersions or solutions of water-soluble compounds, which have enhanced drying and permeability properties. It has surprisingly been found that green (unfired) and fired ceramic tiles decorated with high discharge coverage of the above inkjet inks overcome issues associated with poor outgassing of pyrolytic gases produced during firing.

### BACKGROUND OF THE INVENTION

WO 2015/158738 describes a ceramic ink comprising a carboxylated polyurethane and ceramic inorganic pigments having average particle size between 0.1 and 0.8 µm, the pigments being dispersed in an organic medium.

US 2013/265376 describes an inkjet composition comprising a solvent, additive for dispersion, and inorganic substance wherein the inorganic substance may be a specific frit, a crystalline oxide, or a combination of frits and crystalline oxides.

US8603233 describes solvent-based inkjet compositions comprising metal complexes, such as cobalt ethylhexanoate. The present invention relies on colour development after firing through the use of ceramic pigments.

WO2006/126189 describes solvent-based pigmented inkjet fluids for ceramic decoration comprising a solvent with a boiling point in excess of 200 °C, which is stable at typical firing temperatures.

US9039822 and WO2015157071 describe dispersants for preparing stable dispersions of ceramic pigments in inkjet fluids. No mention of the inclusion of water-soluble compounds was made

US9909023 discloses inkjet compositions for ceramic decoration comprising (colourant) metal salt complexes which may further comprise pigments. No mention of the incorporation of water-soluble compounds according to the present invention is made, nor the capacity of such materials to enhance the properties of printed ceramics during the firing process.

CN106046939 describes a metal-complex containing inkjet fluid where additional surfactants, such as sodium citrate were used. The effect of the present invention based on pigment comprising inkjet fluids was not disclosed.

An issue with current ceramic inkjet technology for the decoration of ceramic tiles, especially when applied at high film weights ('high discharge'), is that a number of defects can occur during firing. These defects include the formation of uneven surfaces, variable decoration quality (including the well-recognized `black kernel' effect) and even distortion of the tile itself. This can especially be the case when the inkjet design is treated with an aqueous glaze composition. The inclusion of water-soluble materials, such as sodium chloride, into the solvent-based pigmented inkjet compositions of the present invention overcomes these issues. Thus, unwanted defects during and after firing of the decorated tiles, such as tile distortion, `black kernel' and poor outgassing of pyrolyzed gases (which may cause the unwanted surface defects of the fired tile) are overcome via the current invention.

A further surprising finding obtained through the inclusion of water-soluble materials into the inks of the present invention is that faster drying times are achieved, both of the ink itself and of any water-based composition, such as a glaze, applied to the dried print prior to firing. The faster drying response is beneficial as it allows for faster production speeds than has previously been achieved with this technology.

Finally, the water-soluble materials included into the inks of the present invention avoid the defects during overprinting, for example with application of water-based compositions, such as glazes, eliminating any needed extra treatment to avoid the repulsion between both systems (water-base and solvent-base).

The inventors have surprisingly found that inkjet compositions comprising ceramic pigments dispersed in an organic medium (i.e. solvent-based ceramic inkjet compositions) can overcome these significant issues by the inclusion of water-soluble metal salts, such as sodium chloride, or other water-soluble materials such as sugars, and the like.

The issues mentioned previously with current solvent-based pigmented inkjet technology for ceramic tile decoration, especially for high coverage designs (e.g. greater than 20 g/m², especially greater than 35 g/m², and more especially greater than 50 g/m²) can be a significant constraint for the technology. The benefits from the present invention in overcoming these industry-wide technical deficiencies are clearly advantageous. The faster drying times that are achievable with compositions prepared according to the invention are also advantageous. From an analysis of the prior art and with respect to current commercial offerings, it is clear that the present invention brings significant technical advance in the field with obvious commercial benefit over the preceding prior art and competition.

As is apparent from the above, the identified background references have not revealed any instance of solvent-based inkjet fluids comprising dispersed ceramic pigments, which further comprise water-soluble compounds such as sodium chloride, potassium chloride, sodium stearate and sugars. It should be stated that the present invention is particularly, but not exclusively directed to compositions comprising dispersions of those recognised classes of pigments used in ceramic decoration. Compositions further comprising both colorants and organometallic complexes are also part of the present invention. Where the water-soluble component of the current invention is a metal salt it is preferably a non-colourant type.

Citation or identification of any document in this application is not an admission that such represents prior art to the present invention.

The terms "water-soluble compound", "water-soluble material", "water-soluble component" and "water-sensitive material" are all used herein interchangeably.

### SUMMARY OF INVENTION

The invention is as defined in the claims. In a first aspect, the present invention provides use of one or more water-soluble compound(s) for achieving faster drying times of a solvent-based inkjet composition comprising one or more dispersion(s) or solution(s) of said one or more water-soluble compound(s), and one or more ceramic pigment(s).

In a second aspect, the present invention provides a solvent-based inkjet composition comprising one or more dispersion(s) or solution(s) of one or more water-soluble compound(s), and one or more ceramic pigment(s), wherein the ceramic pigment is selected from the group consisting of Zr-Pr oxide, Zr—Pr—Si oxide, Zr-Fe-Si oxide, Ti—Cr—Sb oxide, Co—Al—Zn oxide, Zr-Va-Si oxide, Fe-Cr-Co-Ni oxide, Cr-Ca-Sn-Si oxide, Co—Si oxide, Fe-Cr-Zn oxide, and combinations thereof, and wherein the one or more water-soluble compound(s) is selected from an alkaline metal salt and/or an alkaline earth metal salt, an aluminium salt, an ammonium salt or an organic compound, wherein the organic compound is glucose, sucrose, fructose, dextrins, cyclodextrins, sorbates or blends thereof.

In a third aspect, the present invention provides a solvent-based inkjet composition comprising one or more dispersion(s) or solution(s) of one or more water-soluble compound(s), and one or more ceramic pigment(s), wherein:
(i) the one or more water-soluble compound(s) is selected from an alkaline metal salt and/or an alkaline earth metal salt, an aluminium salt, an ammonium salt or an organic compound, wherein the organic compound is glucose, sucrose, fructose, sorbates or blends thereof and wherein the counterion of the salt is selected from chloride, bromide, iodide, sulfite, nitrate, nitrite, acetate, carbonate, hydrogen carbonate, stearate, formate, laurate, tartrate or blends thereof; or
(ii) the one or more water-soluble is selected from sodium chloride, potassium chloride, magnesium chloride, sodium hydrogen carbonate, sodium carbonate, glucose, fructose, calcium chloride, lithium chloride, potassium carbonate, tetrapotassium pyrophosphate, potassium citrate, potassium formate, potassium bicarbonate, potassium sulfate, potassium nitrate and combinations thereof.

In a fourth aspect, the present invention provides a process for providing a printed article comprising printing the inkjet composition of the second or third aspect onto a substrate and drying the inkjet composition.

In a fifth aspect, the present invention provides a printed article comprising the inkjet composition according to the second or third aspect.

In a sixth aspect, the present invention provides a printed article resulting from the process according to the fourth aspect of the invention.

In a seventh aspect, the present invention provides a printed article comprising a substrate and an ink layer on a surface thereof wherein the ink layer is derived from the inkjet composition according to the second or third aspect.

In an eighth aspect, the present invention provides use of a solvent-based inkjet composition for reducing or eliminating one or more defect(s) occurring during or after firing of a ceramic tile decorated with an ink, wherein the composition is according to the second or third aspect, optionally wherein the one or more defect(s) is formation of an uneven tile surface, tile distortion and/or variable decoration quality such as a banding of light and dark areas on the decorated tile.

### BRIEF DESCRIPTION OF FIGURES

Figure 1 is an image showing the absence of glaze repulsion for the beige inventive ink of Example 4B (left-hand image) compared with significant glaze repulsion for the comparative beige ink of Example 4A (right-hand image).
Figure 2 is an image showing the absence of glaze repulsion for the brown inventive ink of Example 2B (left-hand image) compared with significant glaze repulsion for the comparative brown ink of Example 2A (right-hand image).
Figures 3A and 3B are images showing the difference on the contact angle between the comparative ink of Example 2A and the inventive ink of Example 2B respectively.
Figures 4A and 4B are images showing the difference on the degassing effect between the inventive ink of Example 4B and the comparative ink of Example 4A respectively.

### DETAILED DESCRIPTION

Since around the year 2000, single pass inkjet printing has become the most prevalent technology for ceramic tile decoration. As mentioned in the preceding sections, the early technology was based on the use of colorant organometallic complexes dissolved in various organic solvent blends which developed the desired colors during the firing process. This early generation technology was subject to a number of technical limitations including stability issues, as well as limited color intensity and color range. Although improvements to this technology are still being sought, greater technical and commercial success has been achieved through the use of solvent-based inkjet compositions comprising dispersions of pigments suitable for ceramic decoration.

The process of producing a finished decorated tile product typically involves the steps of applying the design to a green (unfired) tile via single pass inkjet printing method; drying the print; applying a water-based glaze; and then firing the tile at temperatures between 500 and 1500 °C, and typically at least 1000 °C. The firing duration is typically from about 20 to about 180 minutes, more typically from about 30 to about 150 minutes. When heavy print designs are employed (`high ink discharge'), that is those with films where greater than about 20 g/m², and more especially greater than 35 g/m² or 50 g/m² of ink is applied to the tile, it can lead to a number of defects after firing such as the well-known `black kernel' effect which is observed as a banding of light and darker areas in the tile decoration. Further defects associated with current technology include uneven decoration surfaces and even distortion of tile and a reduction in the mechanical strength of the finished tile product.

It is understood by those skilled in the art that these defects associated with heavier print designs likely result from a lack of porosity in the inkjet print which restricts the outgassing of the gases produced during the high temperature firing process leading to the aforementioned defects.

The current invention successfully addresses these issues by providing a solvent-based inkjet composition comprising one or more dispersion(s) or solution(s) of one or more water-soluble compound(s), and one or more ceramic pigment(s) as recited in the appended claims. Preferably, the solvent-based inkjet composition is a solvent-based inkjet printing composition, more preferably a solvent-based ceramic inkjet printing composition.

The present invention also provides a printed article comprising the solvent-based inkjet composition according to the invention. Preferably, the printed article further comprises a substrate, preferably a ceramic substrate, more preferably a ceramic tile.

The present invention also provides a printed article comprising a substrate and an ink layer on a surface thereof wherein the ink layer is derived from the solvent-based inkjet composition according to the invention. Preferably, the substrate is a ceramic substrate, more preferably a ceramic tile.

Although the inventors do not wish to be bound by any theory, they postulate that the current invention increases the permeability of the print design thereby enhancing the outgassing of the pyrolytic gases, which are predominantly water and carbon dioxide, produced during the firing processes. By introducing water-soluble compounds into the inventive inkjet compositions, which are preferably salts such as sodium chloride, potassium chloride, sodium stearate, etc. and simple sugars such as fructose and glucose, and subsequently treating the print prior to firing with water or an aqueous glaze, then no `black kernel', uneven surfaces or tile distortion are observed. Again, although the inventors do not wish to be bound by any theory, they postulate that the inclusion of such water-soluble materials in the inkjet inks generates porosity in the print when treated with such aqueous fluids. This may be due to part of the water-soluble component being dissolved out of the otherwise water-insoluble ink to provide the desired porosity.

A further benefit of the inclusion of such water-soluble compounds into the inkjet compositions of the present invention is that they enhance the uniform wetting of the applied aqueous glaze slurry (or water layer), which is clearly advantageous. Yet a further benefit of the inclusion of the water-soluble materials of the current invention is that they improve the drying time of an applied glaze, which is probably due to the ingress of the glaze into the print, along with the superior wetting afforded by the inventive compositions. This faster drying has been found to enable faster line speeds on press. In some cases, the inventors have found that the glaze drying speed achieved with the current invention can be improved by a factor of 5 compared with a comparative ink not containing any water-soluble component. This improved drying speed manifests itself as reduced energy use and an increase in the productivity throughout the printing and subsequent firing stages. All these benefits accruing from the present invention have not been described or alluded to in the prior art.

It is preferable that the jetted ink be dry to the touch, through typical drying means (e.g. air-dried, heat-dried, or otherwise evaporating a portion of the solvent) before the aqueous treatment is applied. If the aqueous treatment (water or glaze) is applied over a wet ink, then the described benefits are likely to be compromised.

The impact of the inclusion of water-sensitive materials (i.e. water-soluble materials), such as sodium chloride or glucose, into the inventive compositions is observed as a uniform spreading of water or of a water-based glaze which is sprayed onto the dried ink surface. The non-uniform wetting on dried inkjet compositions, which is common without the water-soluble component of the current invention, can be an issue, requiring the use of surfactants in the aqueous treatment fluid. Indeed, the inventors have found that this increase in the water receptivity of the ink surface is reflected in the contact angle observed when water droplets are applied onto the dried print (not fired) surface. For an ink prepared according to the current invention when a water droplet is applied to the dry print surface the contact angle will typically be lower than 90°, while if the same test is performed with an ink without the water-soluble dispersed material, the contact angle is almost invariably greater than 90°. This change in wetting performance is of great utility for top coating application, where a top glaze coating is applied over the printed tile for technical reasons (e.g. anti-slip, anti-scratch protection, polishing, etc.). It will be understood by those skilled in the art that there are a large number of glaze options available and that there is no restriction on glaze choice or other aqueous top treatments encompassed by the invention other than that they interact with the dried print to reduce/eliminate the defects, such as `black kernel', etc.

The present invention also provides a process for providing a printed article comprising printing the inkjet composition according to the invention onto a substrate and drying the inkjet composition. Preferably, the substrate is a ceramic, for example a ceramic tile.

Preferably, the printing is inkjet printing.

The present invention also provides a printed article prepared according the process of the invention. Preferably, the printed article prepared according to the process of the invention has a contact angle of less than 90° when a water droplet is applied to a surface of the printed article.

As previously mentioned, the inclusion of the water-soluble material into the ceramic inkjet inks of the current invention also, surprisingly, improves the drying speeds during processing, not only of any aqueous glaze, but most surprisingly of the ink itself when applied to a green (i.e. unfired) tile. This has been found to be particularly the case for inks based on dearomatized aliphatic hydrocarbon solvents, such as Exxsol D140, used in the examples, as well as inks based on ester solvents. The faster drying times achievable with the inventive compositions enable faster line speeds resulting in higher productivity than is achievable with current state-of-the-art technology.

The current invention is directed towards solvent-based ceramic inkjet inks, which are commonly referred to by those skilled in the art as oil-based ceramic inkjet inks. These are essentially dispersions of ceramic (decoration) pigments in an organic solvent such as the dearomatized aliphatic hydrocarbon Exxsol D140 solvent used in the examples. It should be understood that any combination of organic solvents may be used including but not limited to mineral oils, hydrocarbon solvents (such as polybutenes), long chain aliphatic solvents such as paraffins, dearomatized aliphatic hydrocarbons such as those sold under the Exxsol brand (ex. ExxonMobil), ester solvents, glycols, glycol ethers, branched C12-C32 alcohols (such as those sold under the Isofol tradename, ex. Sasol), naphthenic oils, etc. Especially preferred are water-insoluble solvents such as the dearomatized hydrocarbon (i.e. Exxsol D140) used in the examples and ester solvents.

Preferably, the ester solvent is an acetate (e.g. a lower alkyl acetate such as ethyl acetate or butyl acetate), a benzoate (e.g. a lower alkyl benzoate, such as methyl benzoate, or a benzyl benzoate), an adipate (e.g. an alkyl adipate such as dimethyl adipate or dioctyl adipate) or a carbonate (e.g. a cycloalkyl carbonate, such as ethylene carbonate, or a straight chain alkyl (or lower alkyl) such as diethyl carbonate). As used herein, the term "lower alkyl" refers to C₁-₆ alkyl, which may be straight or branched chain, preferably acyclic. Preferably, the ester solvent is a fatty acid ester such as ethyl oleate, rapeseed methyl ester, ethylhexyl myristate, ethylhexyl cocoate, ethylhexyl laurate, ethylhexyl palmitate. Other aliphatic esters may also be used such as 1,2-cyclohexane dicarboxylic acid diisononyl ester (sold under the tradename of Hexamoll DINCH).

Preferably, the organic solvent may be a biosolvent (i.e. a solvent derived from renewable feedstocks) and the biosolvent may be used alone or in combination with another solvent. Preferably the biosolvent is a vegetable oil based biosolvent, e.g. Agripure AP-406 (ex. Cargill) or a Radia biosolvent such as Radia 7956. Preferably, a dearomatized aliphatic hydrocarbon solvent (e.g. Exxsol D140) is used in combination with a vegetable oil based biosolvent.

The solvent-based inkjet compositions according to the present invention are preferably organic-solvent-based inkjet compositions. Preferably, the solvent-based inkjet composition according to the present invention comprise no greater than about 5% (w/w), preferably no greater than about 3% (w/w), more preferably no greater than about 1% (w/w) water based on the total inkjet composition. Preferably, the solvent-based inkjet composition according to the present invention is essentially free (i.e. comprises no greater than about 0.5% (w/w)) of water.

Preferably, the amount of solvent used in the ink of the current invention is from about 30 to about 80% (w/w), preferably from about 35 to about 75% (w/w), preferably from about 40 to about 70% (w/w) of the total ink composition.

Advantageously, the viscosity of the inkjet composition may be modulated by suitable solvents blends. Suitable solvent blends for viscosity adjustment may be based on dioctyl adipate, Radia solvents, ethylhexyl cocoate, ethylhexyl laurate, ethylhexyl palmitate, ethylhexyl myristate, rapeseed methyl ester, a polybutene (e.g. polybutene PIB24 or Indapol H100), Hexamoll DINCH (i.e. 1,2-cyclohexane dicarboxylic acid diisononyl ester), a branched C12-C32 alcohol (e.g. one sold under the tradename Isofol), ethyl oleate and combinations thereof.

Advantageously, ceramic inkjet compositions exhibit a viscosity of about 5-30 cPs, preferably about 10-25 cPs, more preferably about 15-20 cPs. Unless stated otherwise viscosity is measured at 40 °C and a shear rate of 30.5 s⁻¹ using a FungiLab premium rotational viscometer equipped with a LCP spindle.

As used herein, the term ceramic pigment refers to any material that can be used in ceramic decoration, for example, ceramic pigments that impart colour to a surface, or frits clays, minerals and metallic oxides that impart surface effects to ceramics.

Thus, the present invention encompasses any pigment recognized as suitable for ceramic decoration. Any of the recognized classes of pigments used in ceramic decoration may be used as the ceramic pigment. Thus, the ceramic pigment may be a ceramic pigment which imparts colour to the surface of the substrate. As used herein, the term "ceramic pigments" preferably refers to transition metal complex oxides, such as, for example, zirconates and silicates of Va, Ca, Cr, Sn, Ni, Pr, Fe, Co and oxides thereof. Thus, preferred ceramic pigments include transition metal complex oxides of Va, Ca, Cr, Sn, Ni, Pr, Fe, Co. Particularly preferred ceramic pigments are selected from Zr-Pr oxide, Zr—Pr—Si oxide, Zr—Fe—Si oxide, Ti—Cr—Sb oxide, Co—Al—Zn oxide, Zr-Va-Si oxide, Fe—Cr—Co—Ni oxide, Cr-Ca-Sn-Si oxide, Co—Si oxide, and Fe—Cr—Zn oxide. As used herein, the term "ceramic pigment" encompasses a frit and any other typical component used in the manufacture of ceramic inkjet inks, such as clays, minerals and metallic oxides, to develop ceramic surface effects. Of particular utility are ceramic pigments which impart colour to the surface of the substrate, and frits.

Preferably, the ceramic pigment is zinc iron chromite brown spinel.

Preferably, the amount of ceramic pigment used in the ink according to the current invention is from about 15 to about 60% (w/w), preferably from about 20 to about 55% (w/w), preferably from about 25 to about 50% (w/w) of the total ink composition.

Optionally, a dispersant or any combination of dispersants may be used to disperse the pigment, but may be selected from those sold under the Solsperse (ex. Lubrizol), Disperbyk (ex. Byk), Efka, Dispex, etc. (ex. BASF), E-Sperse (ex. Ethox), Fluijet (ex. Lamberti), Tego (ex. Evonik), Decoflux, Product, etc. (ex. Zschimmer & Schwarz), Cliqsperse (ex. Cliq), Spredox (ex. Doxa), Deco (ex Decoroil), Ubedisp (ex. Ube), "Synthro" (ex. Quimoprox), brand names.

Preferably, the amount of dispersant used in the ink according to the current invention is from about 1 to about 10% (w/w), preferable from about 1 to about 8% (w/w), preferably from about 1 to about 6% (w/w) of the total ink composition.

There is no particular restriction on the nature of the water-soluble component of the invention other than that it would preferably be dispersed into the solvent medium of the ink to a particle size (D90) of less than 5 µm, preferably less than 3 µm, more preferably less than 2 µm, and typically less than 1.5 µm. Preferably, the water-soluble component of the invention can be dispersed into the solvent medium of the ink to a particle size (D90) of less than 1 µm. Especially preferred substances are the water-soluble salts of alkaline metals and alkaline earth metals, including sodium, potassium, lithium, magnesium and calcium. Other salts that may be used include those of aluminium. There is no restriction on the nature of the counterion of the salt and may include, for example, any from the following non-limiting list; chlorides, bromides, iodides, sulfates, sulfites, nitrates, nitrites, carbonates, hydrogen carbonates (i.e. bicarbonates), acetates, stearates, laurates, phosphates (including pyrophosphates), citrates, tartrates, formates etc. and blends thereof.

Other water-sensitive compounds (i.e. water-soluble compounds) which may be used in the present invention include, but are not limited to, water-soluble organic compounds such as glucose, fructose, dextrins, cyclodextrins, sorbates, polyethylene glycol, polypropylene glycols, glycols and glycol ethers. Preferably, the water-soluble organic compound is glucose.

Where the water-soluble component of the current invention is a metal salt it is preferably a non-colourant metal salt.

Preferably, any water-sensitive compound used in the current invention disperses (or dissolves) into the solvent medium to a particle size (D90) of less than 1µm and allows the uniform wetting of a water-based fluid (such as water or glaze) when that fluid is applied to a dried print surface of the ink. This can be further characterised in that the contact angle of a water droplet applied to a dried ink surface should preferably be less than 90°.

As used herein, contact angle refers to the static contact angle. As will be appreciated by the skilled person, contact angle is a measure of the wettability of a surface or material. A contact angle of less than 90° indicates a wettable surface, whereas, a contact angle of greater than 90° indicates a poor wettability. Contact angle is measured herein using an OCA 20 contact angle measurement system (DataPhysics Instruments GmbH).

Preferably, the water-soluble compound is selected from sodium chloride, potassium chloride, magnesium chloride, sodium hydrogen carbonate, sodium carbonate, glucose, fructose, sodium stearate, calcium chloride, lithium chloride, potassium carbonate, tetrapotassium pyrophosphate, potassium citrate, potassium formate, potassium bicarbonate, potassium sulfate, potassium nitrate and combinations thereof.

There is no limit to the amount of the water-sensitive component in the inks prepared according to the current invention, so long as it is sufficient to induce the desired effects of porosity and contact angle reduction of any contacting water-based fluid. Based on the dry solid content of the ink, it is preferred that the water-sensitive component of the ink should be in the range 0.1 to 20.0% (w/w), and more preferably in the range 1.0 to 10.0% (w/w) based on the solid content of the ink. Preferably, the amount of water-soluble compound used in the ink is in the range of from about 1 to about 10% (w/w), preferably from about 1 to about 7% (w/w), preferably from about 1 to about 5% (w/w) of the total ink composition. The composition of the present invention may further comprise any blend of additives, including but not limited to de-aerators, antifoams, surfactants/surface control additives, etc.

In the context of the present invention, the term "particle size" refers to the volume distributed median particle diameter (equivalent spherical diameter (esd)). The term "D90" as used herein refers to the 90th percentile volume-based median particle diameter, i.e. the diameter below which 90% by volume of the particle population is found - also referred to as the "D(v,0.9)" value. Particle size distributions can be determined by routine laser diffraction techniques. Unless stated otherwise, particle size distribution measurements as specified or reported herein are as measured by the conventional Malvern Mastersizer 3000 particle size analyzer from Malvern Instruments.

### EXAMPLES

The invention is further described by the following non-limiting examples which further illustrate the invention, and are not intended, nor should they be interpreted to, limit the scope of the invention.

Several water-soluble materials have been tested and evaluated. The inventors have found that inorganic water soluble salts have more impact on the porosity (passing through), whereas the water-soluble organic compounds tended to favour a greater reduction in the contact angle and improving the wetting and evenness of flow of the water-based top coating applications. However, both the inorganic and organic water-soluble compounds tested provided the necessary features in terms of eliminating firing defects resulting from poor outgassing issues and also improving the drying response of the inks when over-coated with water-based glazes.

### Preparation of water-soluble material concentrates

The water-soluble material concentrates were prepared by blending compositions according to Table 1 to produce a pre-dispersion. Specifically, the solvents were added to a mixing tank followed by the dispersant and then the water-soluble material, and the resulting mixture was agitated for at least two hours until a homogeneous mixture was formed. The pre-dispersion was then milled in an attrition mill until the particle size distribution was less than 1µm (D90), as measured by laser diffraction (via a Malvern Mastersizer 3000).

**Table 1: General Water-Soluble Material Dispersion Formulation**

| MATERIAL | Wt % |
|---|---|
| EXXSOL D 140 | 30 |
| AGRIPURE AP-406 | 24 |
| SOLSPERSE J915 | 6 |
| WATER SOLUBLE MATERIAL | 40 |
| Total | 100 |

| | |
|---|---|
| Notes to Table 1: Exxsol D140 is a dearomatized aliphatic hydrocarbon solvent (ex. ExxonMobil) Agripure AP-406 is a vegetable oil based biosolvent (ex. Cargill) Solsperse J915 is a dispersant (ex. Lubrizol) | |

Table 2 provides the detail of the various water-soluble materials used to make the dispersions according to Table 1.

**Table 2: Water-Soluble Materials Tested**

| WATER-SOLUBLE MATERIAL | REF |
|---|---|
| SODIUM CHLORIDE | WSC1 |
| POTASSIUM CHLORIDE | WSC2 |
| MAGNESIUM CHLORIDE | WSC3 |
| SODIUM HYDROGEN CARBONATE | WSC4 |
| SODIUM CARBONATE | WSC5 |
| GLUCOSE | WSC6 |
| FRUCTOSE | WSC7 |
| SODIUM STEARATE | WSC8 |
| CALCIUM CHLORIDE | WSC9 |
| LITHIUM CHLORIDE | WSC10 |
| POTASSIUM CARBONATE | WSC11 |
| TETRAPOSTASSIUM PYROPHOSPHATE | WSC12 |
| POTASSIUM CITRATE | WSC13 |
| POTASSIUM FORMATE | WSC14 |
| POTASSIUM BICARBONATE | WSC15 |
| POTASSIUM SULFATE | WSC16 |
| POTASSIUM NITRATE | WSC17 |

Each of the seventeen Water-Soluble Material Dispersion Formulations prepared in accordance with Tables 1 and 2 were then used in combination with ceramic pigment concentrates in the preparation of brown, blue and black ceramic inkjet compositions. For each colour, a control formulation was prepared, having no water-soluble component dispersed in the ink.

### Example 1: Preparation of a Brown Ceramic Pigment Concentrate

A brown ceramic pigment concentrate according to Table 3 was prepared as follows. The solvents (Exxsol D140 and Agripure AP-460) were introduced into a mixing tank followed by the dispersant (Solsperse J915) and then the ceramic pigment. The resulting mixture was agitated for at least two hours until the mixture was homogeneous. The resulting homogeneous mixture was then milled in an attrition mill until the particle size distribution was less than 1 µm (D90) as measured by laser diffraction (via a Malvern Mastersizer 3000).

**Table 3: Example 1 - Brown Ceramic Pigment Concentrate**

| MATERIAL | Wt % |
|---|---|
| EXXSOL D 140 | 14 |
| AGRIPURE AP-406 | 19 |
| SOLSPERSE J915 | 7 |
| ZINC IRON CHROMITE BROWN SPINEL | 60 |
| Total | 100 |

### Example 2: Preparation of a Brown Inkjet Composition

A brown inkjet composition according to Table 4 was prepared by mixing a potassium chloride concentrate prepared in accordance with Table 1 with a brown ceramic pigment concentrate prepared in accordance with Table 3 and Exxsol D140. An additional solvent blend is added to the mixture to adjust the viscosity to about 19 cPs (at 40 °C and a shear rate of 30.5 s⁻¹). The resulting mixture is agitated for at least one hour to provide a brown finished inkjet ink.

**Table 4: Example 2 - Brown Finished Inkjet Inks**

| MATERIAL | Wt % | |
|---|---|---|
| | Ex. 2A (comparative) | Ex. 2B (inventive) |
| Ex. 1 PIGMENT CONCENTRATE | 73 | 73 |
| EXXSOL D140 | 22 | 16 |
| SOLVENT BLEND FOR VISCOUS ADJUSTMENT | 5 | 4 |
| POTASSIUM CHLORIDE CONCENTRATE | 0 | 7 |
| Total | 100 | 100 |

### Example 3: Preparation of Beige Ceramic Pigment Concentrate

A beige ceramic pigment concentrate was prepared according to Table 5 using the same procedure as Example 1.

**Table 5: Example 3 - Beige Ceramic Pigment Concentrate**

| MATERIAL | Wt % |
|---|---|
| EXXSOL D 140 | 20 |
| AGRIPURE AP-406 | 14 |
| DISPERSANT | 6 |
| ZINC IRON CHROMITE BROWN SPINEL | 60 |
| Total | 100 |

### Example 4: Preparation of Beige inkjet composition

A beige inkjet composition was prepared according to Table 6 using the same procedure as Example 2.

**Table 6: Example 4 - Beige Finished Inkjet Inks**

| MATERIAL | Wt% | |
|---|---|---|
| | Ex. 4A (comparative) | Ex. 4B (inventive) |
| Ex. 3 PIGMENT CONCENTRATE | 48 | 48 |
| EXXSOL D140 | 29 | 27 |
| SOLVENT BLEND FOR VISCOUS ADJUSTMENT | 23 | 20 |
| POTASSIUM CHLORIDE CONCENTRATE | 0 | 5 |
| Total | 100 | 100 |

The drying response time, wettability and degassing effect of the inventive inks according to Examples 2B and 4B were then tested (Examples 5, 6 and 7 respectively). Laboratory verification consisted of a set of tests comparing the control inks against the inventive inks. The tests were done over different green tile substrates (double fast firing biscuit, monoporosa, gres and porcelain biscuits), in combination with three different base glazes (matt, glossy and white).

As demonstrated by Example 5, when tested, all the inventive ink examples comprising the dispersed water-soluble materials after drying and application of either water or a water-based glaze showed faster drying responses than the control formulations. As demonstrated by Example 6, in all cases with the control inks, drops of water in contact with dried print surfaces had contact angles greater than 90°, whereas all the inventive ink samples (comprising the dispersed water-soluble materials) produced contact angles of less than 90°.

As demonstrated by Example 7, the dried inks prepared according to the current invention demonstrated improved porosity. In particular, after being treated with a water spray or over-coated with a glaze, the dried inks of the current invention showed no observable defects after being fired. However, the control inks showed clear evidence of uneven surfaces and `black kernel'.

When tested, all of the water-soluble materials listed in Table 2 provided the same effects as Examples 2B and 4B.

### Example 5: Drying Response Time

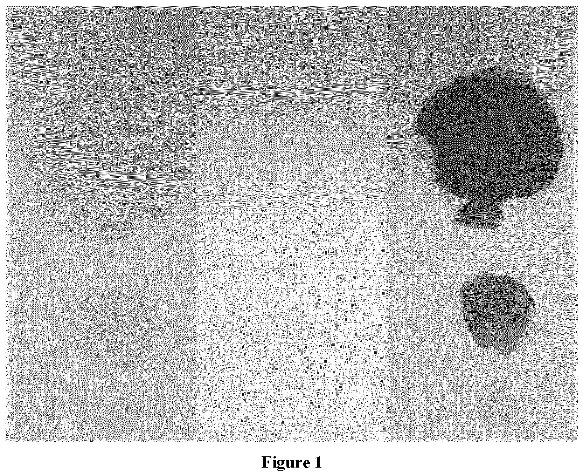

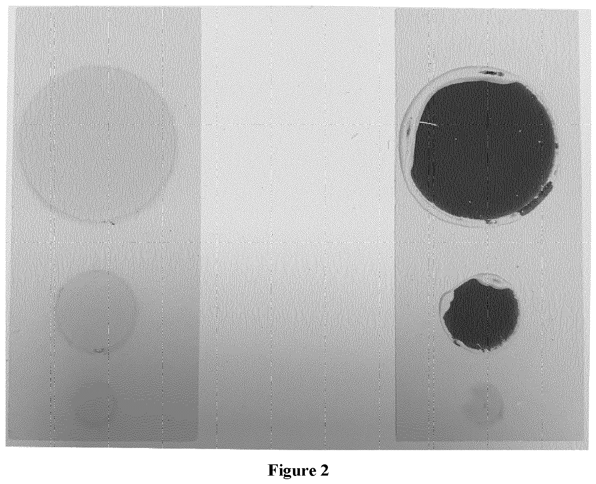

Drying times were tested in respect of inks applied to circles of differing diameter (20 mm, 10 mm or 5 mm) as shown in Figures 1 and 2.

The procedure for testing drying response times consisted of applying a fixed ink quantity of 65 g/m² of the comparative ink or the inventive ink to a green tile substrate pre-coated with a base glaze, and comparing the time until the solvent (of the ink) had absorbed into the glaze leaving a touch dry surface, indicative of the ink-glaze combination becoming dry.

Immediately, a fixed quantity of matt cover glaze is applied over the ink to check the time until the water gets through the ink and the glaze becomes completely dry.

Finally, the glaze repulsion index over the ink is evaluated.

**Table 7: Beige Ink results**

| | CIRCLE DIAMETER | DRYING TIME (sec) | |
|---|---|---|---|
| | | Ex. 4B (inventive) | Ex. 4A (comparative) |
| INK | 20 mm | 34 | 75 |
| | 10 mm | 24 | 45 |
| | 5 mm | 19 | 39 |
| COVER GLAZE | 20 mm | 65 | X |
| | 10 mm | 50 | X |
| | 5 mm | 23 | 23 |
| REPULSION | - | NO | YES |

| | | | |
|---|---|---|---|
| Note: Two of the cover glaze spots are marked as "X" because due to the repulsion there is no possibility of recording the time. | | | |

As illustrated by the images in Figure 1, the inventive ink of Example 4B shown in the left-hand image exhibited no glaze repulsion, whereas, the comparative ink of Example 4A shown in the right-hand image exhibited significant glaze repulsion.

**Table 8: Brown Ink results**

| | CIRCLE DIAMETER | DRYING TIME (sec) | |
|---|---|---|---|
| | | Ex. 2B (inventive) | Ex. 2A (comparative) |
| INK | 20 mm | 30 | 52 |
| | 10 mm | 20 | 42 |
| | 5 mm | 20 | 35 |
| COVER GLAZE | 20 mm | 130 | 175 |
| | 10 mm | 40 | 60 |
| | 5 mm | 30 | 30 |
| REPULSION | | NO | YES |

As illustrated by the images in Figure 2, the inventive ink of Example 2B shown in the left-hand image exhibited no glaze repulsion, whereas, the comparative ink of Example 2A shown in the right-hand image exhibited significant glaze repulsion.

In summary, the inventive ink examples comprising the water-soluble materials showed faster drying responses than the control formulations. The faster drying times achievable with the inventive compositions enable faster line speeds as the glaze can be applied quicker resulting in higher productivity.

### Example 6: Wettability

To further show the hydrophilicity of compositions prepared according to the current invention, the contact angle of a water drop formed over the dried ink is measured as described hereinabove.

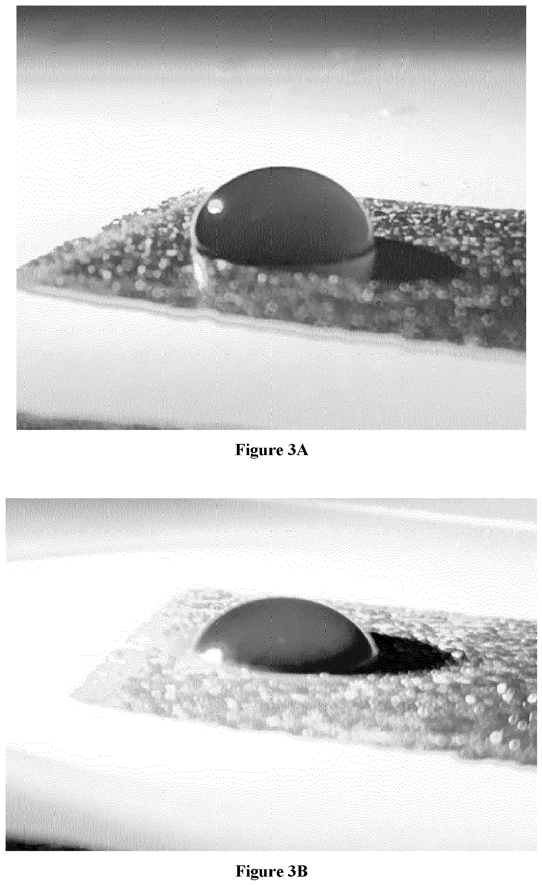

The images shown in Figures 3A and 3B show the difference on the incidence angle between the inventive inks against the comparative versions.

In summary, in the cases with the control inks, drops of water in contact with dried print surfaces had contact angles greater than 90°, whereas the inventive ink samples (comprising the dispersed water-soluble materials) produced contact angles of less than 90° indicating greater wettability of the ink.

### Example 7: Degassing effect

Finally, a third experiment was performed to check the influence of the different ink formulas on the black kernel formation. This procedure consists of the application of a layer of 80 g/m² of ink over a green porcelain tile, and fired to observe the bubble formation on the surface and the appearance of the black kernel.

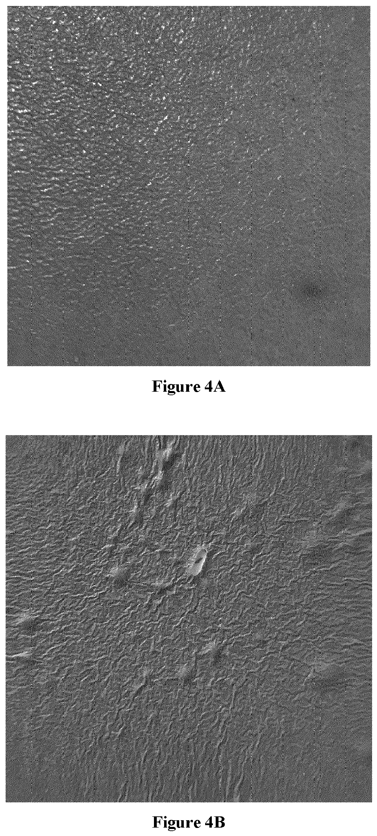

The pictures shown in Figures 4A and 4B show the difference on the degassing effect between the two formulas.

The inventive ink shows no bubble formation due to the porosity obtained from the water-solvent material, which allows the gases formed during the firing cycle to leave the biscuit with almost no restriction.

Conversely, the comparative ink generates a sealed layer that blocks the gases release, forming bubbles and in some cases the black kernel.

Inks prepared according to the current invention have been tested on industrial manufacturing units, and enhancements to the drying speed and reduction of `black kernel', and other firing defects, in line with those found under laboratory conditions, have been achieved thus validating the scope of the invention.

## Claims

1. Use of one or more water-soluble compound(s) for achieving faster drying times of a solvent-based inkjet composition comprising one or more dispersion(s) or solution(s) of said one or more water-soluble compound(s), and one or more ceramic pigment(s).

2. Solvent-based inkjet composition comprising one or more dispersion(s) or solution(s) of one or more water-soluble compound(s), and one or more ceramic pigment(s), wherein the ceramic pigment is selected from the group consisting of Zr-Pr oxide, Zr—Pr—Si oxide, Zr—Fe—Si oxide, Ti—Cr—Sb oxide, Co—Al—Zn oxide, Zr-Va-Si oxide, Fe—Cr—Co—Ni oxide, Cr-Ca-Sn-Si oxide, Co—Si oxide, Fe—Cr—Zn oxide, and combinations thereof, and wherein the one or more water-soluble compound(s) is selected from an alkaline metal salt and/or an alkaline earth metal salt, an aluminium salt, an ammonium salt or an organic compound, wherein the organic compound is glucose, sucrose, fructose, dextrins, cyclodextrins, sorbates or blends thereof.

3. Solvent-based inkjet composition comprising one or more dispersion(s) or solution(s) of one or more water-soluble compound(s), and one or more ceramic pigment(s), wherein:
(i) the one or more water-soluble compound(s) is selected from an alkaline metal salt and/or an alkaline earth metal salt, an aluminium salt, an ammonium salt or an organic compound, wherein the organic compound is glucose, sucrose, fructose, sorbates or blends thereof and wherein the counterion of the salt is selected from chloride, bromide, iodide, sulfite, nitrate, nitrite, acetate, carbonate, hydrogen carbonate, formate, laurate, tartrate or blends thereof; or
(ii) the one or more water-soluble is selected from sodium chloride, potassium chloride, magnesium chloride, sodium hydrogen carbonate, sodium carbonate, glucose, fructose, calcium chloride, lithium chloride, potassium carbonate, tetrapotassium pyrophosphate, potassium citrate, potassium formate, potassium bicarbonate, potassium sulfate, potassium nitrate and combinations thereof.

4. The composition according to claim 3 wherein:
(a) the ceramic pigment is selected from the group consisting of zirconates and silicates of Va, Ca, Cr, Sn, Ni, Pr, Fe, Co and oxides thereof and combinations thereof; or
(b) the ceramic pigment is selected from the group consisting of Zr-Pr oxide, Zr—Pr—Si oxide, Zr—Fe—Si oxide, Ti—Cr—Sb oxide, Co—Al—Zn oxide, Zr-Va-Si oxide, Fe—Cr—Co—Ni oxide, Cr-Ca-Sn-Si oxide, Co—Si oxide, Fe—Cr—Zn oxide, and combinations thereof.

5. The composition according to any of claims 2-4, wherein:
(a) the ceramic pigments are in the form of pigment dispersions; and/or
(b) the alkaline metal salt or alkaline earth metal salt is selected from any comprising sodium, potassium, lithium, calcium, magnesium or blends thereof.

6. The composition according to any one of claims 2 or 4 - 5, wherein the counterion of the salt can be selected from chloride, bromide, iodide, sulfate, sulfite, nitrate, nitrite, phosphate, acetate, carbonate, hydrogen carbonate, stearate, formate, laurate, citrate, tartrate or blends thereof.

7. The composition according to any of claims 2 or 4 - 5 wherein the water-soluble compound is selected from sodium chloride, potassium chloride, sodium stearate, fructose and glucose.

8. The composition according to any of claims 2-7 wherein:
(a) the composition comprises no greater than about 5% (w/w), preferably no greater than about 3% (w/w), more preferably no greater than about 1% (w/w) water;
(b) the composition is essentially free of water (i.e. comprises no greater than about 0.5% (w/w)) of water; and/or
(c) wherein the solvent is essentially insoluble in water.

9. A process for providing a printed article comprising printing the inkjet composition according to any one of claims 2-8 onto a substrate and drying the inkjet composition.

10. The process according to claim 9, wherein the substrate is unfired ceramic, optionally wherein the dried ink film is over-coated with water or a water-based composition prior to being fired, optionally wherein the water-based composition is a glaze; preferably wherein the process further comprises the step of firing the printed unfired ceramic substrate.

11. The process according to any one of claims 9 to 10, wherein:
(a) the inkjet composition is applied at a film weight of 20 g/m², or greater;
(b) the inkjet composition is applied at a film weight of 35 g/m², or greater; or
(c) the inkjet composition is applied at a film weight of 50 g/m², or greater.

12. The process according to any one of claims 10 to 11 wherein the unfired ceramic substrate has been pre-coated with a glaze.

13. A printed article comprising the inkjet composition according to any one of claims 2 to 8 or resulting from the process according to any one of claims 9 to 12.

14. A printed article comprising a substrate and an ink layer on a surface thereof wherein the ink layer is derived from the inkjet composition according to any of claims 2 to 8, optionally wherein the article is a ceramic tile.

15. Use according to claim 1, wherein the composition is as defined in any of claims 2 - 8.

16. Use of a solvent-based inkjet composition for reducing or eliminating one or more defect(s) occurring during or after firing of a ceramic tile decorated with an ink, wherein the composition is as defined in any of claims 2-8, optionally wherein the one or more defect(s) is formation of an uneven tile surface, tile distortion and/or variable decoration quality such as a banding of light and dark areas on the decorated tile.

## Patentansprüche

1. Verwendung einer oder mehrerer wasserlöslicher Verbindungen zur Erzielung schnellerer Trocknungszeiten einer lösungsmittelbasierten Tintenstrahlzusammensetzung, umfassend eine oder mehrere Dispersionen oder Lösungen der einen oder mehreren wasserlöslichen Verbindungen und ein oder mehrere Keramikpigmente.

2. Lösungsmittelbasierte Tintenstrahlzusammensetzung, umfassend eine oder mehrere Dispersionen oder Lösungen einer oder mehrerer wasserlöslicher Verbindungen und ein oder mehrere Keramikpigmente, wobei das Keramikpigment aus der Gruppe bestehend aus Zr-Pr-Oxid, Zr-Pr-Si-Oxid, Zr-Fe-Si-Oxid, Ti-Cr-Sb-Oxid, Co-Al-Zn-Oxid, Zr-Va-Si-Oxid, Fe-Cr-Co-Ni-Oxid, Cr-Ca-Sn-Si-Oxid, Co-Si-Oxid, Fe-Cr-Zn-Oxid und Kombinationen davon ausgewählt ist und wobei die eine oder die mehreren wasserlöslichen Verbindungen aus einem Alkalimetallsalz und/oder einem Erdalkalimetallsalz, einem Aluminiumsalz, einem Ammoniumsalz oder einer organischen Verbindung ausgewählt ist bzw. sind, wobei es sich bei der organischen Verbindung um Glucose, Saccharose, Fructose, Dextrine, Cyclodextrin, Sorbate oder Mischungen davon handelt.

3. Lösungsmittelbasierte Tintenstrahlzusammensetzung, umfassend eine oder mehrere Dispersionen oder Lösungen einer oder mehrerer wasserlöslicher Verbindungen und ein oder mehrere Keramikpigmente, wobei:
(i) die eine oder die mehreren wasserlöslichen Verbindungen aus einem Alkalimetallsalz und/oder einem Erdalkalimetallsalz, einem Aluminiumsalz, einem Ammoniumsalz oder einer organischen Verbindung ausgewählt ist bzw. sind, wobei es sich bei der organischen Verbindung um Glucose, Saccharose, Fructose, Sorbate oder Mischungen davon handelt und wobei das Gegenion des Salzes aus Chlorid, Bromid, Iodid, Sulfit, Nitrat, Nitrit, Acetat, Carbonat, Hydrogencarbonat, Formiat, Laurat, Tartrat oder Mischungen davon ausgewählt ist; oder
(ii) die eine oder die mehreren wasserlöslichen Verbindungen aus Natriumchlorid, Kaliumchlorid, Magnesiumchlorid, Natriumhydrogencarbonat, Natriumcarbonat, Glucose, Fructose, Calciumchlorid, Lithiumchlorid, Kaliumcarbonat, Tetrakaliumpyrophosphat, Kaliumcitrat, Kaliumformiat, Kaliumhydrogencarbonat, Kaliumsulfat, Kaliumnitrat und Kombinationen davon ausgewählt ist bzw. sind.

4. Zusammensetzung nach Anspruch 3, wobei:
(a) das Keramikpigment aus der Gruppe bestehend aus Zirconaten und Silicaten von Va, Ca, Cr, Sn, Ni, Pr, Fe, Co und Oxiden davon und Kombinationen davon ausgewählt ist; oder
(b) das Keramikpigment aus der Gruppe bestehend aus Zr-Pr-Oxid, Zr-Pr-Si-Oxid, Zr-Fe-Si-Oxid, Ti-Cr-Sb-Oxid, Co-Al-Zn-Oxid, Zr-Va-Si-Oxid, Fe-Cr-Co-Ni-Oxid, Cr-Ca-Sn-Si-Oxid, Co-Si-Oxid, Fe-Cr-Zn-Oxid und Kombinationen davon ausgewählt ist.

5. Zusammensetzung nach einem der Ansprüche 2-4, wobei:
(a) die Keramikpigmente in Form von Pigmentdispersionen vorliegen; und/oder
(b) das Alkalimetallsalz oder Erdalkalimetallsalz aus beliebigen Salzen, die Natrium, Kalium, Lithium, Calcium, Magnesium oder Mischungen davon umfassen, ausgewählt ist.

6. Zusammensetzung nach einem der Ansprüche 2 oder 4-5, wobei das Gegenion des Salzes aus Chlorid, Bromid, Iodid, Sulfat, Sulfit, Nitrat, Nitrit, Phosphat, Acetat, Carbonat, Hydrogencarbonat, Stearat, Formiat, Laurat, Citrat, Tartrat oder Mischungen davon ausgewählt sein kann.

7. Zusammensetzung nach einem der Ansprüche 2 oder 4-5, wobei die wasserlösliche Verbindung aus Natriumchlorid, Kaliumchlorid, Natriumstearat, Fructose und Glucose ausgewählt ist.

8. Zusammensetzung nach einem der Ansprüche 2-7, wobei:
(a) die Zusammensetzung nicht mehr als etwa 5 % (w/w), bevorzugt nicht mehr als etwa 3 % (w/w), weiter bevorzugt nicht mehr als etwa 1 % (w/w), Wasser umfasst;
(b) die Zusammensetzung weitgehend frei von Wasser ist (d. h. nicht mehr als etwa 0,5 % (w/w)) Wasser umfasst; und/oder
(c) wobei das Lösungsmittel im Wesentlichen wasserunlöslich ist.

9. Verfahren zur Herstellung eines gedruckten Artikels, bei dem man die Tintenstrahlzusammensetzung nach einem der Ansprüche 2-8 auf ein Substrat aufbringt und die Tintenstrahlzusammensetzung trocknet.

10. Verfahren nach Anspruch 9, wobei es sich bei dem Substrat um ungebrannte Keramik handelt, gegebenenfalls wobei der getrocknete Tintenfilm vor dem Brennen mit Wasser oder einer wasserbasierten Zusammensetzung überbeschichtet wird, gegebenenfalls wobei es sich bei der wasserbasierten Zusammensetzung um eine Glasur handelt; vorzugsweise wobei das Verfahren ferner den Schritt des Brennens des bedruckten ungebrannten Keramiksubstrats umfasst.

11. Verfahren nach einem der Ansprüche 9 bis 10, wobei:
(a) die Tintenstrahlzusammensetzung in einem Filmgewicht von 20 g/m² oder mehr aufgebracht wird;
(b) die Tintenstrahlzusammensetzung in einem Filmgewicht von 35 g/m² oder mehr aufgebracht wird; oder
(c) die Tintenstrahlzusammensetzung in einem Filmgewicht von 50 g/m² oder mehr aufgebracht wird.

12. Verfahren nach einem der Ansprüche 10 bis 11, wobei das ungebrannte Keramiksubstrat mit einer Glasur vorbeschichtet worden ist.

13. Gedruckter Artikel, der die Tintenstrahlzusammensetzung nach einem der Ansprüche 2 bis 8 umfasst oder aus dem Verfahren nach einem der Ansprüche 9 bis 12 erhalten wurde.

14. Gedruckter Artikel, umfassend ein Substrat und eine Tintenschicht auf eine Oberfläche davon, wobei sich die Tintenschicht von der Tintenstrahlzusammensetzung nach einem der Ansprüche 2 bis 8 ableitet, gegebenenfalls wobei es sich bei dem Artikel um eine Keramikfliese handelt.

15. Verwendung nach Anspruch 1, wobei die Zusammensetzung wie in einem der Ansprüche 2-8 definiert ist.

16. Verwendung einer lösungsmittelbasierten Tintenstrahlzusammensetzung zur Verringerung oder Beseitigung eines oder mehrerer Defekte, die während oder nach dem Brennen einer mit einer Tinte dekorierten Keramikfliese auftreten, wobei die Zusammensetzung wie in einem der Ansprüche 2-8 definiert ist, gegebenenfalls wobei es sich bei dem einen oder den mehreren Defekten um die Bildung einer unebenen Fliesenoberfläche, Fliesenverzerrung und/oder variierende Dekorationsqualität, wie eine Bänderung aus hellen und dunklen Bereichen auf der dekorierten Fliese, handelt.

## Revendications

1. Utilisation d'un ou plusieurs composés solubles dans l'eau pour obtenir des temps de séchage plus rapides d'une composition pour jet d'encre à base de solvant comprenant une ou plusieurs dispersions ou solutions dudit ou desdits composés solubles dans l'eau, et un ou plusieurs pigments de céramique.

2. Composition pour jet d'encre à base de solvant comprenant une ou plusieurs dispersions ou solutions d'un ou plusieurs composés solubles dans l'eau, et un ou plusieurs pigments de céramique, le pigment de céramique étant choisi dans le groupe constitué par un oxyde de Zr-Pr, un oxyde de Zr-Pr-Si, un oxyde de Zr-Fe-Si, un oxyde de Ti-Cr-Sb, un oxyde de Co-Al-Zn, un oxyde de Zr-Va-Si, un oxyde de Fe-Cr-Co-Ni, un oxyde de Cr-Ca-Sn-Si, un oxyde de Co-Si, un oxyde de Fe-Cr-Zn, et des combinaisons correspondantes, le ou les composés solubles dans l'eau étant choisis parmi un sel de métal alcalin et/ou un sel de métal alcalino-terreux, un sel d'aluminium, un sel d'ammonium ou un composé organique, le composé organique étant le glucose, le saccharose, le fructose, des dextrines, des cyclodextrines, des sorbates ou des mélanges correspondants.

3. Composition pour jet d'encre à base de solvant comprenant une ou plusieurs dispersions ou solutions d'un ou plusieurs composés solubles dans l'eau, et un ou plusieurs pigments de céramique :
(i) le ou les composés solubles dans l'eau étant choisis parmi un sel de métal alcalin et/ou un sel de métal alcalino-terreux, un sel d'aluminium, un sel d'ammonium ou un composé organique, le composé organique étant le glucose, le saccharose, le fructose, des sorbates ou des mélanges correspondants et le contre-ion du sel étant choisi parmi chlorure, bromure, iodure, sulfite, nitrate, nitrite, acétate, carbonate, hydrogénocarbonate, formiate, laurate, tartrate ou des mélanges correspondants ; ou
(ii) le ou les composés solubles dans l'eau étant choisis parmi chlorure de sodium, chlorure de potassium, chlorure de magnésium, hydrogénocarbonate de sodium, carbonate de sodium, glucose, fructose, chlorure de calcium, chlorure de lithium, carbonate de potassium, pyrophosphate de tétrapotassium, citrate de potassium, formiate de potassium, bicarbonate de potassium, sulfate de potassium, nitrate de potassium et des combinaisons correspondantes.

4. Composition selon la revendication 3 :
(a) le pigment de céramique étant choisi dans le groupe constitué par des zirconates et des silicates de Va, Ca, Cr, Sn, Ni, Pr, Fe, Co et des oxydes correspondants et des combinaisons correspondantes ; ou
(b) le pigment de céramique étant choisi dans le groupe constitué par un oxyde de Zr-Pr, un oxyde de Zr-Pr-Si, un oxyde de Zr-Fe-Si, un oxyde de Ti-Cr-Sb, un oxyde de Co-Al-Zn, un oxyde de Zr-Va-Si, un oxyde de Fe-Cr-Co-Ni, un oxyde de Cr-Ca-Sn-Si, un oxyde de Co-Si, un oxyde de Fe-Cr-Zn, et des combinaisons correspondantes.

5. Composition selon l'une quelconque des revendications 2 - 4 :
(a) les pigments de céramique étant sous la forme de dispersions de pigments ; et/ou
(b) le sel de métal alcalin ou le sel de métal alcalino-terreux étant choisi parmi l'un quelconque comprenant sodium, potassium, lithium, calcium, magnésium ou des mélanges correspondants.

6. Composition selon l'une quelconque des revendications 2 ou 4 - 5, le contre-ion du sel pouvant être choisi parmi chlorure, bromure, iodure, sulfate, sulfite, nitrate, nitrite, phosphate, acétate, carbonate, hydrogénocarbonate, stéarate, formiate, laurate, citrate, tartrate ou des mélanges correspondants.

7. Composition selon l'une quelconque des revendications 2 ou 4 - 5, le composé soluble dans l'eau étant choisi parmi chlorure de sodium, chlorure de potassium, stéarate de sodium, fructose et glucose.

8. Composition selon l'une quelconque des revendications 2 - 7 :
(a) la composition ne comprenant pas plus d'environ 5 % (p/p), préférablement pas plus d'environ 3 % (p/p), plus préférablement pas plus d'environ 1 % (p/p) d'eau ;
(b) la composition étant essentiellement exempte d'eau (c'est-à-dire ne comprenant pas plus d'environ 0,5 % (p/p)) d'eau ; et/ou
(c) le solvant étant essentiellement insoluble dans l'eau.

9. Procédé pour fournir un article imprimé comprenant l'impression de la composition pour jet d'encre selon l'une quelconque des revendications 2-8 sur un substrat et le séchage de la composition pour jet d'encre.

10. Procédé selon la revendication 9, le substrat étant une céramique non cuite, éventuellement le film d'encre séché étant sur-revêtu par de l'eau ou une composition à base d'eau avant d'être cuit, éventuellement la composition à base d'eau étant un glaçage ; préférablement le procédé comprenant en outre l'étape de cuisson du substrat de céramique non cuit imprimé.

11. Procédé selon l'une quelconque des revendications 9 à 10 :
(a) la composition pour jet d'encre étant appliquée à un poids de film de 20 g/m², ou plus ;
(b) la composition pour jet d'encre étant appliquée à un poids de film de 35 g/m², ou plus ; ou
(c) la composition pour jet d'encre étant appliquée à un poids de film de 50 g/m², ou plus.

12. Procédé selon l'une quelconque des revendications 10 à 11, le substrat de céramique non cuit ayant été pré-revêtu par un glaçage.

13. Article imprimé comprenant la composition pour jet d'encre selon l'une quelconque des revendications 2 à 8 ou résultant du procédé selon l'une quelconque des revendications 9 à 12.

14. Article imprimé comprenant un substrat et une couche d'encre sur une surface correspondante, la couche d'encre étant issue de la composition pour jet d'encre selon l'une quelconque des revendications 2 à 8, éventuellement l'article étant une tuile de céramique.

15. Utilisation selon la revendication 1, la composition étant telle que définie dans l'une quelconque des revendications 2 - 8.

16. Utilisation d'une composition pour jet d'encre à base de solvant pour la réduction ou l'élimination d'un ou plusieurs défauts se produisant pendant ou après la cuisson d'une tuile de céramique décorée avec une encre, la composition étant telle que définie dans l'une quelconque des revendications 2 - 8, éventuellement le ou les défauts étant la formation d'une surface de tuile irrégulière, une distorsion de tuile et/ou une qualité de décoration variable comme un bandage de zones claires et sombres sur la tuile décorée.
